# EUROPÄISCHE PATENTANMELDUNG

(11) **EP 2 508 074 A1**
(43) Veröffentlichungstag der Anmeldung: **10.10.2012**
(21) Anmeldenummer: 12159898.1
(22) Anmeldetag: 16.03.2012
(51) Int. Cl.: A21B 1/48, B65G 47/66

(54) **Durchlaufofen mit wenigstens zwei Transportbändern**

(30) Priorität: 06.04.2011 DE 102011016251
(71) Anmelder: Daub Backtechnik GmbH, 21147 Hamburg (DE)
(72) Erfinder: Rücker, Andreas, 21039 Börnsen (DE)
(74) Vertreter: Glawe, Delfs, Moll

(57) **Zusammenfassung**

Die Erfindung betrifft Durchlauföfen (1) umfassend einen Backraum (2) und eine darin angeordnete Transporteinrichtung (10), um Teiglinge (90) von einem Aufgabeende (3) zu einem Ausgabeende (4) zu transportieren. Die erfindungsgemäße Transporteinrichtung (10) weißt dabei wenigsten zwei in Transportrichtung (80) vom Aufgabeende (3) zum Ausgabeende (4) hintereinander angeordnete Transportbänder (11.1, 11.2) auf.

## Beschreibung

Die Erfindung betrifft Durchlauföfen umfassend einen Backraum und eine darin angeordnete Transporteinrichtung, um Teiglinge von einem Aufgabeende zu einem Ausgabeende zu transportieren.

In Bäckereien und Backstuben werden Durchlauföfen eingesetzt, um eine große Anzahl von gleichartigen Backwaren herzustellen. Die Backwaren werden dabei gemäß einem rezeptgemäßen Backprogramm gebacken, bei dem die Temperatur bzw. der Temperaturverlauf und/oder die Verweildauer im Durchlaufofen vorgegeben sind. Mit Temperaturverlauf ist dabei eine ggf. eine entlang der Strecke vom Aufgabeende zum Ausgabeende planvoll variierende Temperatur im Backraum bezeichnet.

Zum Backen von Backwaren in Durchlauföfen werden die Teiglinge (d. h. die zu backenden Backwaren) an einem Aufgabeende eines Durchlaufofens auf eine Transporteinrichtung aufgegeben. Diese Transporteinrichtung transportiert die Teiglinge in einer vorbestimmten Zeit (Verweildauer) durch den Backraum des Durchlaufofen, in dem eine vorgegebene Temperatur bzw. ein vorgegebener Temperaturverlauf herrscht. Nach Durchlauf des Backraumes sind die Teiglinge fertig gebacken und können an einem Ausgabeende von der Transporteinrichtung entnommen werden.

Es ist bekannt, dass die Transporteinrichtung als endloses Transportband ausgestaltet sein kann, welches sich zwischen einer Umlenkwelle am Aufgabeende und einer Umlenkwelle am Ausgabeende erstreckt. Das Transportband verläuft dabei durch den Backraum des Durchlaufofens, womit eine kontinuierliche Förderung von auf dem Transportband befindlichen Teiglingen bzw. Backwaren durch den Backraum des Durchlaufofens möglich ist.

Werden in einem Durchlaufofen zunächst Teiglinge nach einem ersten Backprogramm gebacken, so müssen im Stand der Technik zunächst alle Teiglinge aus dem Backraum des Durchlaufofens herausgefördert werden, bevor Teiglinge nach einem anderen Backprogramm gebacken werden können. Bei Durchlauföfen gemäß dem Stand der Technik ist es dabei unerheblich, ob sich die beiden Backprogramme in der Verweildauer der Teiglinge im Backraum (und damit der Fördergeschwindigkeit der Transporteinrichtung) und/oder der Temperatur bzw. dem Temperaturverlauf im Backraum voneinander unterscheiden. Für einen Wechsel des Backprogramms muss ein Durchlaufofen gemäß dem Stand der Technik zunächst "leerlaufen", bevor die Transportgeschwindigkeit der Transporteinrichtung und/oder die Temperatur bzw. der Temperaturverlauf im Backraum verändert werden kann. Die ersten Teiglinge, die gemäß dem zweiten Backprogramm gebacken werden sollen, können frühestens erst dann auf die Transporteinrichtung des Durchlaufofen aufgegeben werden, wenn die letzten Teiglinge gemäß dem ersten Backprogramms von der Transporteinrichtung entnommen worden sind.

Insbesondere im Bereich der industriellen Fertigung von Backwaren, wo die Effizienz und Auslastung von Durchlauföfen eine gewichtige Rolle spielt, wird der teils lange Zeitraum, der zum Wechsel eines Backprogramms bei einem Durchlaufofen benötigt wird, als nachteilig empfunden.

Der Erfindung liegt die Aufgabe zu Grunde, einen Durchlaufofen zu schaffen, der die aus dem Stand der Technik bekannten Nachteile nicht oder nur noch im verringerten Maße aufweist.

Gelöst wird diese Aufgabe durch einen Durchlaufofen gemäß dem Hauptanspruch. Vorteilhafte Weiterbildungen sind Gegenstand der abhängigen Ansprüche.

Demnach betrifft die Erfindung einen Durchlaufofen umfassend einen Backraum und eine darin angeordnete Transporteinrichtung, um Teiglinge von einem Aufgabeende zu einem Ausgabeende zu transportieren, wobei die Transporteinrichtung wenigstens zwei in Transportrichtung vom Aufgabeende zum Ausgabeende hintereinander angeordnete Transportbänder umfasst.

Durch die erfindungsgemäße Anordnung von wenigstens zwei Transportbändern hintereinander wird der Backraum des Durchlaufofens in mehrere Backzonen unterteilt, wobei die Anzahl der Backzonen der Anzahl der hintereinander angeordneten Transportbänder entspricht. Die Erfindung bietet den Vorteil, dass in den einzelnen Backzonen des erfindungsgemäßen Durchlaufofens unterschiedliche Backprogramme gefahren werden können. Demgegenüber kann in einem Durchlaufofen mit nur einem Transportband und damit auch nur einer Backzone nur ein einziges Backprogramm im gesamten Durchlaufofen gefahren kann.

Bei einem erfindungsgemäßen Durchlaufofen mit zwei hintereinander angeordneten Transportbändern ist es möglich, am Aufgabeende der Transportvorrichtung bereits Teiglinge, die mit einem zweiten Backprogramm gebacken werden müssen, aufzugeben, während Teiglinge, die gemäß einem ersten Backprogramm gebacken werden, noch am Ausgabeende von der Transporteinrichtung entnommen werden. Es ist nämlich bereits dann möglich, das zweite Backprogramm in der dem Aufgabeende nächstgelegenen Backzone zu starten, sobald die Teiglinge, die gemäß einem ersten Backprogramm gebacken werden, diese Backzone vollständig verlassen haben. Die Teiglinge, die gemäß dem ersten Backprogramm gebacken werden, können sich aber sehr wohl noch in der oder den übrigen Backzonen befinden.

Es ist bevorzugt, wenn jedes Transportband eine separate Antriebseinheit aufweist, wobei die Antriebseinheiten separat ansteuerbar sind. Dadurch ist es möglich, dass in einer ersten Backzone ein Backprogramm mit einer zweiten Verweildauer gestartet wird, während in wenigsten einer weiteren Backzone noch Teiglinge gemäß einem Backprogramm mit einer ersten Verweildauer gebacken werden.

Ist die zweite Verweildauer länger oder kürzer als die erste Verweildauer, so wird die Fördergeschwindigkeit des Transportbandes in der ersten Backzone reduziert oder erhöht, sobald sich in dieser Backzone keine Teiglinge mehr befinden, die gemäß dem Backprogramm mit der ersten Verweildauer gebacken werden müssen. Die Geschwindigkeit in der oder den nachfolgenden Backzonen entspricht zunächst weiter der ersten Verweildauer, zumindest solange bis alle Teiglinge, die gemäß dem Backprogramm mit der ersten Verweildauer gebacken werden sollen, aus der jeweiligen Backzone herausgefördert sind. Sind alle Teiglinge, die gemäß dem Backprogramm mit der ersten Verweildauer gebacken werden sollen, aus einer Backzone herausgefördert, kann die Geschwindigkeit des Transportbandes in dieser Backzone an die zweite Verweildauer angepasst werden.

Ist die zweite Verweildauer kürzer als die Erste, besteht die Gefahr, dass die Teiglinge, die gemäß dem Backprogramm mit der zweiten Verweildauer gebacken werden sollen, in eine nachfolgende Backzone gefördert werden, während sich dort noch Teiglinge, die gemäß dem Backprogramm mit der ersten Verweildauer gebacken werden sollen, befinden und die Fördergeschwindigkeit des Transportbandes in dieser Backzone noch der der ersten Verweildauer entspricht. Ist die zweite Verweildauer kürzer als die Erste, muss also solange mit dem Aufgeben von Teiglingen, die gemäß dem Backprogramm mit der zweiten Verweildauer gebacken werden sollen, gewartet werden, bis das beschriebene Auflaufen sicher ausgeschlossen werden kann. Es ist bevorzugt, wenn ein Anzeigeelement vorgesehen ist, das anzeigt, ob Teiglinge aufgegeben werden können, ohne dass die Gefahr des Auflaufens besteht.

Es ist weiter bevorzugt, wenn der Durchlaufofen separat ansteuerbare Heizelemente aufweist, so dass in den einzelnen Backzonen unterschiedliche Temperaturen oder Temperaturverläufe einstellbar sind. Durch entsprechend ansteuerbare Heizelemente ist es möglich, das Backprogramm nicht nur in Hinblick auf die Verweildauer der Teiglinge im Backraum, sondern auch in Hinblick auf die Temperatur bzw. den Temperaturverlauf einzustellen. Die Temperatur bzw. der Temperaturverlauf kann dabei in den einzelnen Backzonen gesondert eingestellt werden, so dass - ähnlich wie oben in Bezug auf die Transportgeschwindigkeit - in verschiedenen Backzonen unterschiedliche Backprogramme in Hinblich auf Temperatur bzw. Temperaturverlauf gefahren werden können.

Da es ggf. einige Zeit in Anspruch nimmt, die Temperatur bzw. den Temperaturverlauf in einer oder mehrere Backzonen anzupassen, ist es bevorzugt, wenn ein Anzeigeelement vorgesehen ist, das anzeigt, ob Teiglinge aufgegeben werden können, so dass sie mit der rezeptgemäßen Temperatur bzw. dem rezeptgemäßen Temperaturverlauf gebacken werden. Das Anzeigeelement für die erfolgte Anpassung der Temperatur bzw. des Temperaturverlaufs kann mit dem oben beschriebenen Anzeigeelement für das Vermeiden des Auflaufens kombiniert sein.

Weiter bevorzugt ist es, wenn eine Regelungseinrichtung zum Ansteuern der Antriebselemente und/oder der Heizelemente vorgesehen ist. Die Regelungseinrichtung kann außerdem das oder die Anzeigeelemente steuern. Durch eine Regelungseinrichtung kann ein Backprogrammwechsel sicher durchgeführt werden, sodass alle Teiglinge rezeptgemäß gebacken werden und ein Auflaufen ausgeschlossen werden kann. Es können verschiedene Sensoren (Temperaturfühler, Lichtschranken, Gewichtssensoren, Kameras, o.ä.) vorgesehen sein, um die Situation in den einzelnen Backzonen zu erfassen. Die Sensordaten laufen in der Regelungseinrichtung zusammen, wo sie ausgewertet werden. Durch die Überprüfung der einzelnen Backzonen kann gewährleistet, dass alle Teiglinge rezeptgemäß gebacken werden und es zu keinem Auflaufen kommt.

Bei einem erfindungsgemäßen Durchlauföfen müssen die Teiglinge von einem Transportband auf das nächste übergeben werden. An dem Übergang zwischen zwei benachbarten Transportbändern befinden sich jedoch die jeweiligen Umlenkrollen, mit denen die Transportbänder umgelenkt werden. Aufgrund dieser Umlenkung ergibt zwischen zwei benachbarten Transportbändern in der Regel ein Spalt, in den Teiglinge geraten können. Geraten Teiglinge in diesen Spalt, kann der Durchlaufofen verschmutzt oder gar beschädigt werden. Die Größe des Spaltes ist von dem Durchmesser der jeweiligen Umlenkrollen abhängig; die Gefahr, dass Teiglinge in selben geraten, ist abhängig von der Spaltgröße und der Größe der Teiglinge.

Um in einem erfindungsgemäßen Durchlaufofen Teiglinge unabhängig von ihrer Größe backen zu können, kann eine Transfervorrichtung vorgesehen sein, die Teiglinge von einem Transportband auf ein benachbartes Transportband überträgt. Durch die Transfervorrichtung kann verhindert werden, dass Teiglinge in den Spalt zwischen zwei hintereinander angeordneten Transportbändern geraten. Aufgrund der Transfervorrichtung besteht weiterhin keine Notwendigkeit mehr, den Spalt möglichst klein auszugestalten. Vielmehr ist es möglich, den Spalt ausreichend groß zu wählen, sodass die Reinigung und/oder Wartung des Durchlaufofens und insbesondere der Transportbänder vereinfacht wird.

Die Transfervorrichtung selbst kann ein Transferband umfassen, bei dem es sich um ein unendliches, umlaufendes Förderband handelt. Das Transferband kann dabei so ausgebildet sein, dass Teiglinge an dem einen Ende des Transferbandes von einem ersten Transportband aufgekrabbelt werden und am anderen Ende auf ein zweites Transportband abgelegt werden.

Die Transfervorrichtung kann weiterhin eine eigene Antriebseinheit zum Betrieb des Transferbandes aufweisen. Es ist aber auch möglich, dass das Transferband mit einem benachbarten Transportband mechanisch gekoppelt wird. Die mechanische Koppelung kann dabei so ausgebildet sein, das die Fördergeschwindigkeit des Transferbandes der Fördergeschwindigkeit des Transportbandes, mit dem das Transferband mechanisch gekoppelt ist, entspricht.

Es ist weiter bevorzugt, wenn die Transfervorrichtung aus dem Durchlaufofen herausnehmbar ausgestaltet ist. Dadurch kann die Reinigungs- und Wartungsfreundlichkeit gesteigert werden. Wird die Transfervorrichtung aus dem Durchlaufofen herausgenommen, so entsteht ein Freiraum zwischen einzelnen Transportbändern, der besseren Zugriff auf die Transportbänder und/oder andere Komponenten des Durchlaufofens ermöglicht, was die Wartung und/oder Reinigung des Durchlaufofens erleichtert. Ggf. ist der durch das Herausnehmen der Transfervorrichtung entstandene Freiraum ausreichend groß, sodass Wartungs- und/oder Reinigungspersonal in den Innenraum des Durchlaufofens gelangen kann. Es hat sich als besonders vorteilhaft erwiesen, wenn die Transfervorrichtung in eine Richtung senkrecht zur Transportrichtung herausnehmbar ist.

Die Erfindung wird nun anhand vorteilhafter Ausführungsformen unter Bezugnahme auf die beigefügten Zeichnungen beispielhaft beschrieben. Es zeigen:
- Figur 1: eine erste Ausführungsform eines erfindungsgemäßen Durchlaufofens;
- Figur 2: einen Detailschnitt durch den Durchlaufofen gemäß Figur 1;
- Figur 3: ein zweites Ausführungsbeispiel eines erfindungsgemäßen Durchlaufofens;
- Figur 4: einen Detailschnitt durch den Durchlaufofen gemäß Figur 3.

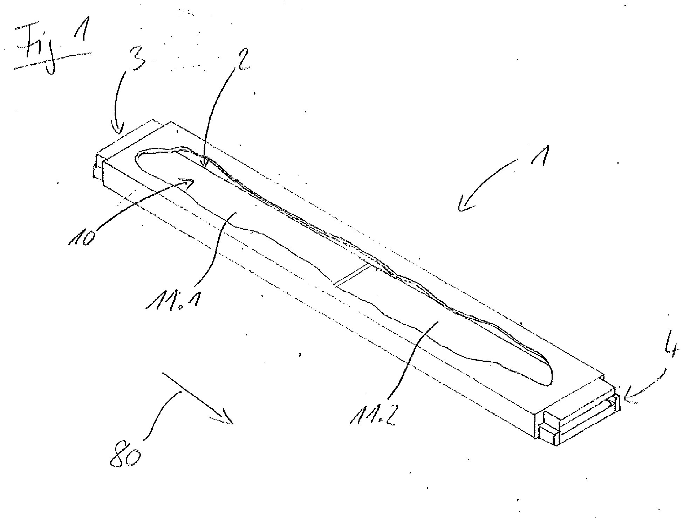

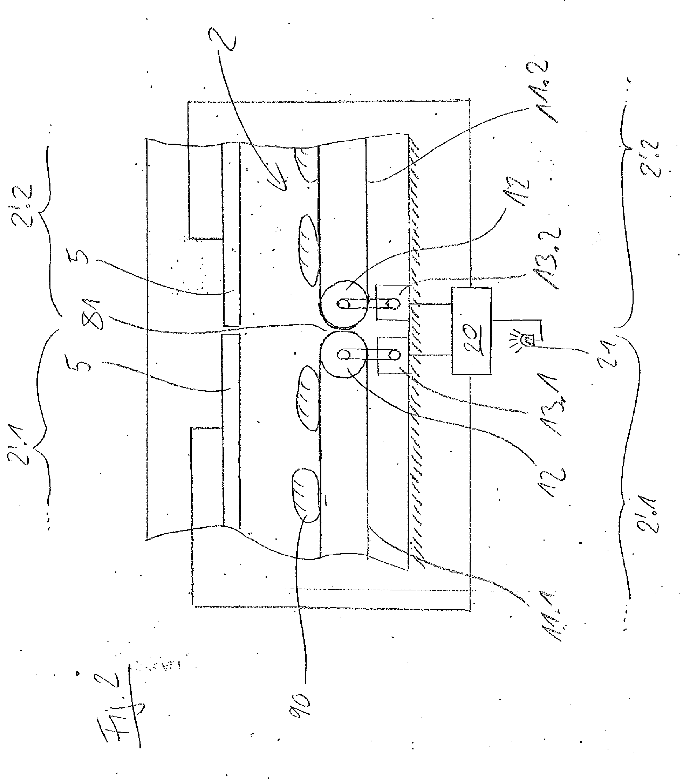

In Figuren 1 und 2 ist ein erstes Ausführungsbeispiel eines erfindungsgemäßen Durchlaufofens 1 dargestellt.

Der Durchlaufofen 1 umfasst einen innerhalb eines Gehäuses ausgebildeten Backraum 2, ein Aufgabeende 3 und eine Ausgabeende 4. Innerhalb des Backraums 2 sind außerdem Heizelemente 5 vorgesehen, mit denen sich eine gewünscht Temperatur oder ein gewünschte Temperaturverlauf entlang vom Aufgabeende 3 zum Ausgabeende 4 innerhalb des Backraums 2 erreichen lässt. Weiterhin ist eine Transporteinrichtung 10 vorgesehen, mit der Teiglinge 90 vom Aufgabeende 3 durch den Backraum 2 zu dem Ausgabeende 4 transportiert werden können. Die Transporteinrichtung 10 umfasst zwei in Transportrichtung vom Aufgabeende 3 zum Ausgabeende 4 (vgl. Pfeil 80 in Figur 1) hintereinander angeordnete Transportbänder 11.1, 11.2. Das erste Transportband 11.1 erstreckt sich zwischen einer Umlenkwelle (nicht dargestellt) am Aufgabeende 3 und einer Umlenkwellen 12 innerhalb des Backraums 2. Das zweite Transportband 11.2 erstreckt sich von einer Umlenkwelle 12 im Backraum 2 zu einer Umlenkwelle (nicht dargestellt) am Ausgabeende 4. Die Umlenkwelle 12 beider Transportbänder 11.1, 11.2 im Backraum 2 sind parallel zueinander und in Transportrichtung 80 direkt hintereinander angeordnet, so dass Teiglinge 90 von dem einen Transportband 11.1 auf das andere Transportband 11.2 übergeben werden können.

Auf Aufgabeende 3 können Teiglinge 90 auf das Transportband 11.1 aufgegeben werden können. Sie werden dann von diesem Transportband 11.1 in Transportrichtung 80 durch den Backraum 2 gefördert und innerhalb des Backraums 2 auf das Transportband 11.2 übergeben. Von dem Transportband 11.2 werden die Teiglinge 90 dann weiter durch den Backraum 2 zum Ausgabeende 4 befördert, wo sie entnommen werden können. Aufgrund der im Backraum 2 herrschenden Temperatur bzw. des dort herrschenden Temperaturverlaufs werden die am Aufgabeende 3 auf das Transportband 11.1 aufgegebenen Teiglinge 90 beim Durchlaufen des Backraums 2 gebacken, sodass sie am Ausgabeende 4 fertig gebacken sind bzw. den gewünschten Backgrad erreicht haben, und von dem Transportband 11.2 entnommen werden können.

Die beiden Transportbänder 11.1, 11.2 werden durch separate Antriebseinheiten 13.1, 13.2 angetrieben. Die Antriebseinheiten 13.1, 13.2 sind durch die Regelungseinrichtung 20 getrennt voneinander steuerbar, so dass sich unterschiedliche Fördergeschwindigkeiten bei den Transportbändern 11.1, 11.2 einstellen lassen. Weiterhin ist die Regelungseinrichtung 20 dazu ausgebildet, die Heizelemente 5 entlang jedes der Transportbänder 11.1, 11.2 getrennt voneinander anzusteuern, so dass entlang jedes der Transportbänder 11.1, 11.2 die Temperatur bzw. der Temperaturverlauf separat eingestellt werden kann. Es sind außerdem Sensoren (nicht dargestellt) vorgesehen, mit denen die Regelungseinrichtung die Geschwindigkeit der Transportbänder 11.1, 11.2 und die Temperatur bzw. den Temperaturverlauf entlang der Transportbänder 11.1, 11.2 aufnehmen kann. Weiterhin können Sensoren vorgesehen sein, mit denen die Beladung der Transportbänder 11.1, 11.2 mit Teiglingen 90 überprüft werden kann. Dabei kann es sich bspw. um Gewichtssensoren, Lichtschranken und/oder Kameras handeln.

Der Backraum 2 ist in zwei Backzonen 2'.1, 2'.2 eingeteilt, wobei die Backzonen 2'.1, 2'.2 durch die Transportbänder 11.1, 11.2 definiert werden. Durch die separate Ansteuerbarkeit der Transportbänder 11.1, 11.2 sowie der Heizelement 5 entlang der jeweiligen Transportbänder 11.1, 11.2 bzw. in den jeweiligen Backzonen 2'.1, 2'.2 ist es möglich, in den Backzonen 2'.1, 2'.2 unterschiedliche Backprogramme im Hinblick auf die Verweildauer der Teiglinge 90 im Backraum 2 und der Temperatur bzw. den Temperaturverlauf zu fahren.

Die Vorteile, die sich daraus ergeben, werden nun anhand eines Beispiels näher erläutert, bei dem nacheinander Teiglinge 90 nach zwei verschiedenen Rezepten bzw. Backprogrammen gebacken werden. Dabei zeichnet sich das erste Backprogramm durch eine erste Verweildauer der Teiglinge 90 im Ofen sowie eine erste Temperatur aus. Bei dem zweiten Backprogramm sollen die Teiglinge 90 in einer zweiten Verweildauer bei einer zweiten Temperatur gebacken werden.

Für die Teiglinge 90, die gemäß dem ersten Backprogramm gebacken werden sollen, wird die Temperatur im gesamten Backraum 2, d.h. in beiden Backzonen 2'.1, 2'.2 auf die erste Temperatur eingestellt. Außerdem werden die Antriebselemente 13.1, 13.2 derart angesteuert, dass ein am Aufgabeende 3 auf die Transporteinrichtung 10 aufgegebener Teigling 90 die gewünschte erste Verweildauer im Backraum 2 verbleibt, bis er am Ausgabeende 4 entnommen werden kann. Insoweit entspricht die Verwendung des erfindungsgemäßen Durchlaufofens 1 der eines herkömmlichen Durchlaufofens mit einem einzigen, durchgehenden Transportband.

Ist die gewünschte Anzahl an Teiglingen 90 gemäß dem ersten Backprogramm am Aufgabeende 3 in den Durchlaufofen aufgegeben, werden zunächst keine weiteren Teiglinge am Aufgabeende mehr auf das Transportband 11.1 aufgelegt. Die noch auf dem ersten Transportband 11.1 befindlichen Teiglinge 90 werden nach und nach an das zweite Transportband 11.2 übergeben.

Sobald die Regelungseinrichtung 20 feststellt, dass sich keine Teiglinge 90 mehr auf dem Transportband 11.1 befinden, wird die Fördergeschwindigkeit des Transportbandes 11.1 sowie die Temperatur durch die Heizelemente 5 in der dem Transportband 11.1 zugeordneten Backzone 2'.1 auf das zweite Backprogramm eingestellt. Die Regelungseinrichtung 20 kann das Leerlaufen des ersten Transportbandes 11.1 dabei über Sensoren (bspw. Gewichtssensoren oder Kameras) feststellen oder kann der Zeitpunkt des Leerlaufens aus der Fördergeschwindigkeit gemäß der ersten Verweildauer berechnen. Unterdessen läuft das Transportband 11.2 sowie die dazugehörigen Heizelemente 5 weiter gemäß dem ersten Backprogramm. So wird sichergestellt, dass sich die auf dem zweiten Transportband 11.2 zum Zeitpunkt des Leerlaufens des ersten Transportbandes 11.1 befindlichen Teiglinge 90 weiter gemäß dem ersten Backprogramm gebacken werden.

Sobald die gewünschte Fördergeschwindigkeit und Temperatur gemäß dem zweiten Backprogramm in der Backzone 2'.1 eingestellt sind gibt die Regelungseinrichtung 20 über ein Anzeigeelement 21 ein Signal aus, dass Teiglinge 90, die gemäß zweitem Backprogramm gebacken werden soll, auf das erste Transportband 11.1 aufgegeben werden können.

Während in der ersten Backzone 2'.1 bereits Teiglinge gemäß dem zweiten Backprogramm gebacken werden können, werden die letzten Teiglinge 90 gemäß dem ersten Backprogramm in der Backzone 2'.2 fertig gebacken. Sobald auch die zweite Backzone 2'.2 leergelaufen ist, wird die Fördergeschwindigkeit des Transportbandes 11.2 sowie die dazugehörigen Heizelemente 5 auf eine Fördergeschwindigkeit entsprechend der zweiten Verweildauer sowie eine Temperatur entsprechend der zweiten Temperatur geregelt. Teiglinge 90, die gemäß dem zweiten Backprogramm in der Backzone 2'.1 bereits teilweise gebacken wurden, werden dann an das zweite Transportband 11.2 übergeben, in dessen Backzone 2'.2 ebenfalls das zweite Backprogramm gefahren wird, und dort fertig gebacken.

Mit dem erfindungsgemäßen Durchlaufofen 1 ist es also möglich, einen gegenüber einen Durchlaufofen mit einem durchgehenden Transportband schnelleren Wechsel des Backprogramms durchzuführen. Es muss nämlich nicht mehr so lange abgewartet werden, bis der Durchlaufofen vollständig leergelaufen ist, sondern lediglich dass zumindest die erste Backzone 2'.1 leergelaufen ist.

Je nachdem wie groß die Temperaturdifferenz zwischen dem ersten Backprogramm und dem zweiten Backprogramm ist und/oder die Verweildauer im zweiten Backprogramm geringer ist als die im ersten Backprogramm, muss vermieden werden, dass die Teiglinge, die gemäß dem zweiten Backprogramm gebacken werden sollen, bei einer falschen Temperatur gebacken werden oder es zu einem Auflaufen der Teiglinge kommt. Auflaufen bedeutet dabei, dass Teiglinge 90, die gemäß dem zweiten Backprogramm gebacken werden sollen, von einem ersten Transportband 11.1 an ein zweites Transportband 11.2 übergeben werden, bevor letzteres mit Teiglingen 90, die gemäß dem ersten Backprogramm gebacken werden sollen, leergelaufen ist. Die Regelungseinrichtung 20 ist daher so ausgebildet, dass sie das Anzeigeelement 21 erst dann aktiviert, wenn die ordnungsgemäße Durchführung des zweiten Backprogramms gewährleistet werden kann. Die Regelungseinrichtung 20 kann dabei insbesondere die Zeit, die für einen Temperaturwechsel benötigt wird, sowie die Zeit, die zum Leerlaufen des zweiten Transportbandes 11.2 benötigt wird, berücksichtigen.

Wie in Figur 2 zu erkennen, bildet sich in dem Bereich zwischen den beiden Transportbänder 11.1, 11.2 ein Spalt 81, in den ggf. Teiglinge 90 geraten können, wodurch der Durchlaufofen1 bzw. die Transporteinrichtung 10 verschmutzt oder gar beschädigt werden kann. Der Durchlaufofen gemäß Figuren 1 und 2 ist folglich für solche Teiglinge 90 nicht geeignet, die aufgrund ihrer Größe in den Spalt 81 geraten können.

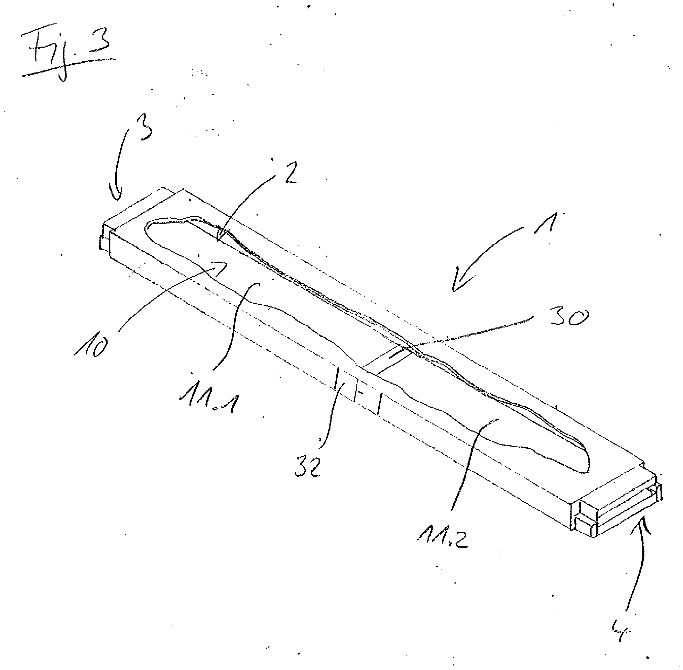

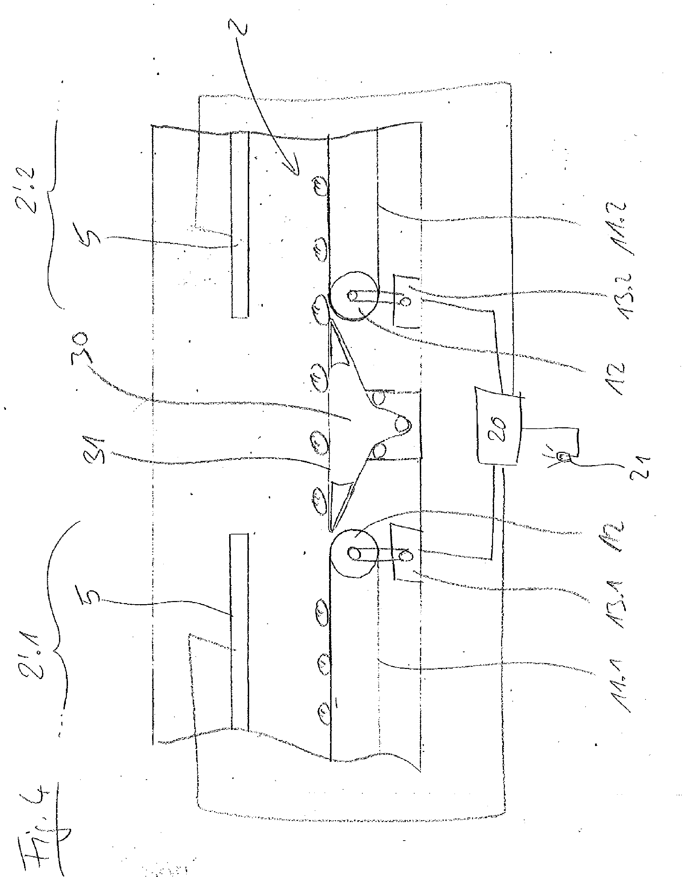

In Figuren 3 und 4 ist ein zweites Ausführungsbeispiel eines erfindungsgemäßen Durchlaufofens 1 dargstellt, bei dem die Gefahr der Verschmutzung oder der Beschädigung durch Teiglinge 90, die in den Spalt 81 zwischen den Transportbänder 11.1, 11.2 geraten, minimiert ist, und zwar unabhängig von der Größe der Teiglinge 90.

Der Durchlaufofen 1 gemäß Figuren 3 und 4 ist im Wesentlichen gleich aufgebaut wie der Durchlaufofen gemäß 1 und 2, weshalb für gleiche Komponenten auch gleiche Bezugsziffern verwendet werden. Für die Erläuterung der einzelnen Komponenten und der Funktionsweise des Durchlaufofens 1 wird auf die obigen Ausführungen verwiesen. Im Folgenden wird lediglich auf die Unterschiede zwischen den beiden Ausführungsformen gemäß Figuren 1 und 2 bzw. Figuren 3 und 4 eingegangen.

Der Durchlaufofen gemäß Figuren 3 und 4 zeichnet sich dadurch aus, dass zwischen den beiden Transportbändern 11.1, 11.2 eine Transfervorrichtung 30 vorgesehen ist. Die Transfervorrichtung 30 ist dazu ausgebildet, Teiglinge 90 vom ersten Transportband 11.1 aufzunehmen und auf das zweite Transportband 11.2 zu übertragen, ohne dass die Teiglinge 90 selbst dabei einen Spalt 81 wie bei dem Durchlaufofen 1 gemäß Figuren 1 und 2 überwinden müssen. Indem ein entsprechender Spalt 81 vermieden wird, ist der Durchlaufofen 1 gemäß Figuren 3 und 4 für Teiglinge jeglicher Größe geeignet.

Die Transfervorrichtung 30 umfasst ein Transferband 31, bei dem es sich - wie bei den Transportbändern 11.1, 11.2 - um ein endloses, umlaufendes Förderband handelt. Das Transferband 31 kann dabei durch eine eigene Antriebseinheit (nicht dargestellt) angetrieben werden. Es ist aber auch möglich, dass der Antrieb durch eine Kopplung der Transfervorrichtung 30 mit einer Antriebseinheit 13.1, 13.2 eines der beiden Transportbänder 11.1, 11.2 gekoppelt ist. Die Kopplung erfolgt dabei bevorzugt derart, dass die Fördergeschwindigkeit des Transferbandes 30 der Fördergeschwindigkeit des Transportbandes 11.1, 11.2 entspricht, mit dessen Antriebseinheit die Transfereinrichtung 30 gekoppelt ist.

Um die Wartung des Durchlaufofens 1 und insbesondere die der Transportbänder 11.1, 11.2 und Antriebseinheiten 13.1, 13.2 zu erleichtern, ist vorgesehen, dass die Transfereinrichtung 30 seitlich aus dem Ofen 1 herausgezogen werden kann. Dazu sind im Gehäuse des Ofens 1 Türen 32 vorgesehen. Wird die Transfervorrichtung 30 aus dem Ofen entfernt, ist ausreichend Platz vorhanden, die einzelnen Komponenten des Durchlaufofens 1 zu warten und/oder zu reinigen. Der durch das Herausnehmen der Transfervorrichtung 30 geschaffene Freiraum im Durchlaufofen 1 ist bei dem dargestellten Ausführungsbeispiel so groß, dass Wartungs- oder Reinigungspersonal in den Durchlaufofen 1 gelangen kann, um im Innern des Durchlaufofens Wartungs- oder Reinigungsarbeiten, insbesondere an den Transportbändern 11.1, 11.2, durchführen zu können.

Auch wenn in den beigefügten Figuren lediglich solche Durchlauföfen 1 dargestellt sind, die zwei Transportbänder 11.1, 11.2 umfassen, ist die Erfindung nicht auf solche Durchlauföfen 1 beschränkt. Vielmehr ist es auch möglich, dass drei oder mehr Transportbänder 11.1, 11.2, ... hintereinander angeordnet werden.

## Patentansprüche

1. Durchlaufofen (1) umfassend einen Backraum (2) und eine darin angeordnete Transporteinrichtung (10), um Teiglinge (90) von einem Aufgabeende (3) zu einem Ausgabeende (4) zu transportieren, **dadurch gekennzeichnet, dass** die Transporteinrichtung (10) wenigstens zwei in Transportrichtung (80) vom Aufgabeende (3) zum Ausgabeende (4) hintereinander angeordnete Transportbänder (11.1, 11.2) umfasst.

2. Durchlaufofen nach Anspruch 1, **dadurch gekennzeichnet, dass** jedes Transportband (11.1, 11.2) eine separate Antriebseinheit (13.1, 13.2) aufweist, wobei die Antriebseinheiten (13.1, 13.2) separat ansteuerbar sind.

3. Durchlaufofen nach Anspruch 1 oder 2, **dadurch gekennzeichnet, dass** der Durchlaufofen (1) separat ansteuerbare Heizelemente (5) aufweist, so dass entlang der einzelnen Transportbänder (11.1, 11.2) unterschiedliche Temperaturen oder Temperaturverläufe einstellbar sind.

4. Durchlaufofen nach Anspruch 2 oder 3, **dadurch gekennzeichnet, dass** eine Regelungseinrichtung zum Ansteuern der Antriebseinheiten (13.1, 13.2) und/oder Heizelemente (5) vorgesehen ist.

5. Durchlaufofen nach einem der vorhergehenden Ansprüche, **dadurch gekennzeichnet, dass** zwischen zwei benachbarten Transportbändern (11.1, 11.2) eine Transfervorrichtung (30) vorgesehen ist, welche Teiglinge (90) von dem einen Transportband (11.1) auf das andere Transportband (11.2) überträgt.

6. Durchlaufofen nach Anspruch 5, **dadurch gekennzeichnet, dass** die Transfervorrichtung (30) ein Transferband (31) umfasst.

7. Durchlaufofen nach Anspruch 6, **dadurch gekennzeichnet, dass** die Transfervorrichtung (30) mit einem benachbarten Transportband (11.1, 11.2) oder der Antriebseinheit (13.1, 13.2) eines benachbarten Transportbandes (11.1, 11.2) mechanisch gekoppelt ist, sodass das Transferband (31) angetrieben wird.

8. Durchlaufofen nach einem der Ansprüche 5 bis 7, **dadurch gekennzeichnet, dass** die Transfervorrichtung (30) aus dem Durchlaufofen (1) herausnehmbar ist, vorzugsweise in eine Richtung senkrecht zur Transportrichtung (80).
